# EUROPEAN PATENT APPLICATION

(11) **EP 4 831 450 A1**
(43) Date of publication of application: **28.10.2026**
(21) Application number: 26173090.7
(22) Date of filing: 17.04.2026
(51) Int. Cl.: F01D 21/00

(54) **ENGINE POWER MODULE INSPECTION REQUIREMENTS**

(30) Priority: 17.04.2025 US 202519182078
(71) Applicant: RTX Corporation, Farmington, CT 06032 (US)
(72) Inventor: PHAN, Uyen, Farmington, 06032 (US); KERNOZICKY, Garrett, Farmington, 06032 (US); TRACY, Jeffrey A., Farmington, 06032 (US); CONNORS, Kerrin Elizabeth Mogan, Farmington, 06032 (US); VANDENBOSCH, Ross A., Farmington, 06032 (US)
(74) Representative: Dehns

(57) **Abstract**

A method of inspecting a damaged gas turbine engine (20) includes the steps of 1) receiving a notification of potential damage, 2) checking for visual damage on an outermost rotor in a propulsor section (22) on the gas turbine engine (20), 2A) if there is no visual damage in step 2) then assessing whether there is likely further downstream damage utilizing a propulsor distributed inspection model for a remainder of the propulsor section (22), and 2B) if there is visual damage in step 2) then comparing the amount of damage to a limit, 3) if the amount of damage in step 2B) is greater than the limit, predicting an amount of further downstream damage in the propulsor section (22) utilizing the propulsor distributed inspection model and 4) if the amount of damage in step 2B) is less than the limit, again, predicting an amount of likely downstream damage in the propulsor section utilizing the propulsor distributed inspection model. An inspection system is also disclosed.

## Description

### FIELD OF THE INVENTION

This application relates to a process to develop gas turbine engine inspection requirements.

### BACKGROUND OF THE INVENTION

Gas turbines are known, and typically include a propulsor delivering air as propulsion air, and for delivering air into a compressor. The air is compressed in the compressor and delivered into a combustor where it is mixed with fuel and ignited. Products of the combustion pass downstream over turbine rotors, driving them to rotate.

One challenge with gas turbine engines is the so-called foreign object damage or "FOD." A flying aircraft may sometimes have a bird or other undesired element move into the propulsor and/or the compressor and damage rotor.

Current inspection protocol assumes that hardware further downstream in a particular module is also damaged and in need of repair. This may cause the engine to be off wing for a longer period than would be desirable.

### SUMMARY OF THE INVENTION

In an aspect of the present invention, a method of inspecting a damaged gas turbine engine includes the steps of 1) receiving a notification of potential damage, 2) checking for visual damage on an outermost rotor in a propulsor section on the gas turbine engine, 2A) if there is no visual damage in step 2) then assessing whether there is likely further downstream damage utilizing a propulsor distributed inspection model for a remainder of the propulsor section, and 2B) if there is visual damage in step 2) then comparing the amount of damage to a limit, 3) if the amount of damage in step 2B) is greater than the limit, predicting an amount of further downstream damage in the propulsor section utilizing the propulsor distributed inspection model and 4) if the amount of damage in step 2B) is less than the limit, again, predicting an amount of likely downstream damage in the propulsor section utilizing the propulsor distributed inspection model.

In an embodiment of the above, the outermost rotor is an integrally bladed rotor.

In another embodiment according to any of the previous embodiments, all of a plurality of rotors in the propulsor section are integrally bladed rotors.

In another embodiment according to any of the previous embodiments, further including comparing the result of step 4) to an acceptable amount of downstream propulsor damage based upon the propulsor distributed inspection model.

In another embodiment according to any of the previous embodiments, if the amount of predicted downstream damage is at a level above the acceptable amount in step 4), then performing a boroscopic inspection on the propulsor section.

In another embodiment according to any of the previous embodiments, the result of the propulsor boroscopic inspection is utilized with a compressor distributed inspection model to predict an amount of damage in a compressor section and comparing the predicted amount of damage to acceptable compressor damage limits, and if the amount of predicted compressor damage exceeds the acceptable compressor damage limits, then performing a boroscopic inspection on the compressor section.

In another embodiment according to any of the previous embodiments, if the step 2B) damage is less than the limit, then predicting downstream propulsor damage per the propulsor distributed inspection model is compared to acceptable downstream limits, and if the predicted amount of downstream propulsor damage exceeds the acceptable propulsor section limits, then performing a boroscopic inspection of the propulsor.

In another embodiment according to any of the previous embodiments, performing an assessment of compressor damage to a compressor section based upon a compressor distributed inspection module in response to the predicted downstream propulsor damage being less than the propuslor acceptable downstream limits.

In another embodiment according to any of the previous embodiments, a predicted amount of compressor damage to the compressor section based upon an assessment of the compressor distributed inspection model is compared to compressor damage limits, and if the amount of damage exceeds the compressor damage limits then performing a boroscopic inspection on the compressor section.

In another embodiment according to any of the previous embodiments, further including performing a propulsor boroscopic inspection of the propulsor section, and predicting compressor damage of a compressor section utilizing a compressor distributed inspection model and a result of the propulsor boroscopic inspection.

In another embodiment according to any of the previous embodiments, further including comparing the predicted compressor damage to a compressor damage limit, and if the predicted compressor damage exceeds the compressor damage limit, then performing a boroscopic inspection on the compressor section.

In another embodiment according to any of the previous embodiments, the propulsor distributed inspection model and a parallel compressor distributed inspection model are developed based upon empirical stress information across a plurality of engines, cycle damage across a plurality of engines, and fleet foreign object damage data across a plurality of engines.

In another embodiment according to any of the previous embodiments, a probability distribution is developed and utilized to form the distributed inspection models based upon observed downstream damage from the fleet foreign object damage data.

In another embodiment according to any of the previous embodiments, the propulsor distributed inspection model includes a model for each of a plurality of rotors in the propulsor section, and the compressor distributed inspection model includes a compressor distributed inspection model for each of a plurality of rotors in a compressor section.

In another embodiment according to any of the previous embodiments, further including comparing the distributed inspection models to actual inspection data to validate the accuracy of the distributed inspection models.

In another aspect of the present invention, an inspection system for predicting damage in gas turbine engine sections includes at least one processor and memory. The at least one processor is configured to carry out the method of any of the above aspect and embodiments.

In another aspect of the present invention, an inspection system for predicting damage in gas turbine engine sections includes at least one processor and memory. The at least one processor is configured to collectively execute a distributed inspection model. The distributed inspection model is developed using empirical damage data from a fleet of bench tests for similar gas turbine engines, and a fleet of data which associates cycles with stress. The distributed inspection model also is developed with fleet damage data associating actual downstream damage data with associated upstream damage data. The distributed inspection model is operable to predict a probability distribution of damage to downstream rotors based upon upstream damage.

In an embodiment of the above, a probability distribution is developed and utilized to form the distributed inspection model based upon observed downstream damage from the fleet foreign object damage.

In another embodiment according to any of the previous embodiments, the distributed inspection model includes a propulsor distributed inspection model that includes a model for each of a plurality of rotors in the propulsor section, and a compressor distributed inspection model that includes a compressor distributed inspection model for each of a plurality of rotors in a compressor section.

In another embodiment according to any of the previous embodiments, the distributed inspection model includes a propulsor distributed inspection model that includes a model for each of a plurality of rotors in the propulsor section, and a compressor distributed inspection model includes a compressor distributed inspection model for each of a plurality of rotors in a compressor section.

In another embodiment according to any of the previous embodiments, the distributed inspection model is compared to actual inspection data to validate the accuracy of the distributed inspection model.

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1A schematically shows a gas turbine engine.
Figure 1B shows an integrally bladed rotor as may be included in the Figure 1A engine.
Figure 2A is a flow chart of a method to inspect an engine such as the Figure 1 engine.
Figure 2B schematically shows a boroscopic inspection.
Figure 3A shows development of an inspection module for the rotors and for use with the Figure 2 flow chart.
Figure 3B is an example of an inspection system including a plurality of models that come together to be utilized in the Figure 2 flow chart, and which are each individually developed with the method of Figure 3A.

### DETAILED DESCRIPTION

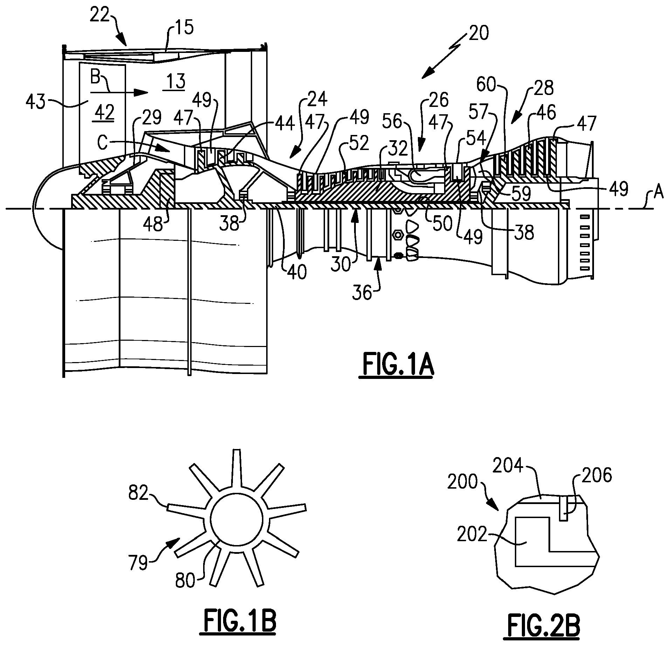

Figure 1A schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches, or more narrowly no more than 75 inches. For example, the maximum radius of the fan blades 43 can be between 45 inches and 60 inches, such as between 50 inches and 55 inches. Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. It should be understood that the teachings disclosed herein may be utilized with various engine architectures, such as low-bypass turbofan engines, prop fan and/or open rotor engines, turboprops, turbojets, etc. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of Ibm of fuel being burned divided by Ibf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F) (30 °C). The TET may be greater than or equal to 2700.0 °F (1482 °C), or more narrowly less than or equal to 3500.0 °F (1927 °C), such as between 2750.0 °F (1510 °C) and 3350.0 °F (1843 °C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F (537 °C), or more narrowly greater than or equal to 800.0 °F (427 °C), such as between 900.0 °F (482 °C) and 975.0 °F (524 °C). The relatively low EGT can be utilized in combination with the other techniques disclosed herein to reduce fuel consumption.

A rotor is shown in Figure 1B as an integrally bladed rotor 79 having a core or disk 80 and a plurality of integrally formed blades 82. The fan section and compressor section may each have a plurality of integrally bladed rotors.

Gas turbine engines such as the Figure 1A engine can be subject to damage from objects while an associated aircraft is in the air. As an example, bird strikes can damage rotors, especially in the front end of the engine, or in the propulsor and compressor sections. Under prior art protocol, when damage is determined at an upstream end, there is an assumption that similar damage will be found in downstream components. Thus, inspection occurs that may be more than would be necessary.

The current disclosure attempts to minimize unnecessary inspection, and resultant downtime in the aircraft and engine.

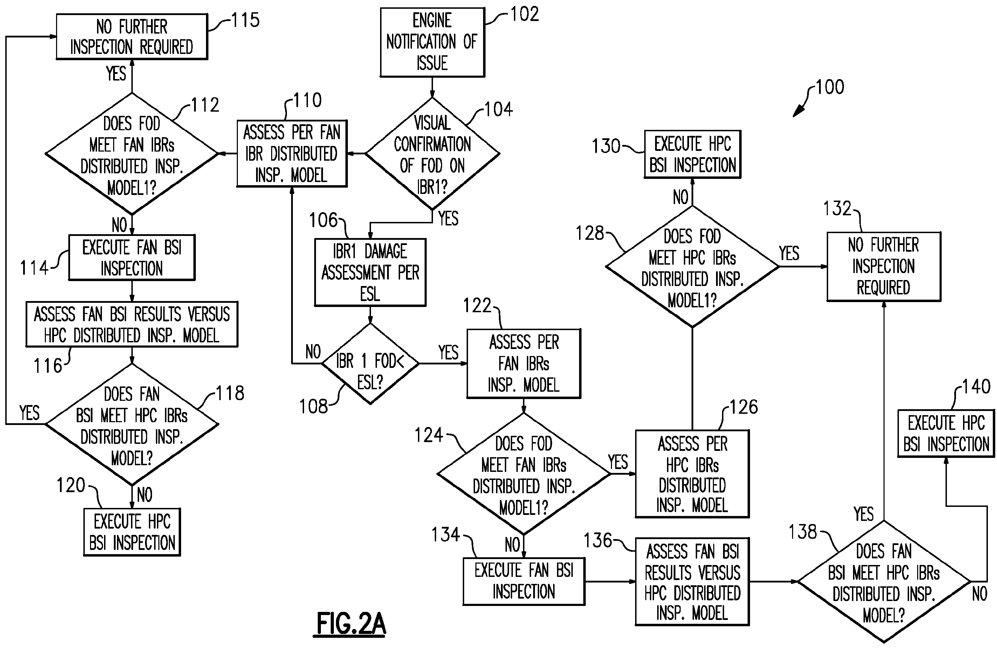

A flow chart 100 is shown in Figure 2A. At step 102 there is a notification of an issue with regard to a particular engine. At step 104 a maintenance worker, or appropriate visual inspection tool, will provide visual confirmation of FOD, or damage, on an outermost rotor. In a disclosed embodiment, the rotors of the fan and the compressor are all integrally bladed rotors. However, the teaching of this disclosure will benefit other engines and rotor types.

If no visible damage can be found on the first integrally bladed rotor, then at step 110 a distributed inspection model, which is developed as described below, for the fan section is evaluated to predict downstream damage. At step 112 the question is asked whether the predicted FOD is sufficient to meet the required amount of damage as per the fan integrally bladed rotor distributor inspection model. If it does not meet that model then at step 114 a boroscopic inspection to the fan section is taken.

As shown schematically in Figure 2B, a boroscopic inspection at 200 is taken on a rotor 202. A camera probe 206 extends through a casing to look at the rotor 202 and its blades. The boroscopic inspection as utilized within this disclosure may be as known.

The result of the boroscopic inspection is assessed at step 116 and utilized in combination with a compressor distributed inspection model to predict compressor damage. At step 118, the flow chart asks does the fan boroscopic information indicate that the compressor distributed inspection model and its requirements are met.

If the answer is yes then the flow chart extends to step 115, and no further inspection is required.

Notably, if step 112 results in the fan integrally bladed rotor distributed inspection model requirements are met, the same step 115 follows.

However, if step 118 indicates that the fan boroscopic inspection information indicates the compressor distributed inspection model will predict undesired damage to the compressor, then at step 120 a boroscopic inspection occurs at the compressor.

It is not unusual for there to be no damage to the outermost rotor, or the first integrally bladed rotor, and thus the branch 110-120 should be taken when there is no visual damage on the first rotor. As known, the circumferential distance and cross-sectional area between stages in a fan and compressor section is reduced as one moves further into the engine and downstream. As such, it is possible for a bird, as an example, to not strike the first rotor, but to strike the second or subsequent rotors.

On the other hand, if step 104 indicates there is FOD on the first integrally bladed rotor then at step 106 the amount of that damage is assessed per an expanded serviceable limit. If at step 108 the integrally bladed rotor FOD is less than an expanded serviceable limit, then at step 122 there is an assessment of the fan integrally bladed rotor module inspection model.

On the other hand, if step 108 indicates the damage on the outer integrally bladed rotor is greater than the ESL then the flow chart returns to step 110 to assess for more downstream damage.

Returning to step 122, the flow then moves to determine whether the predicted amount of damage is acceptable for downstream components at step 124. If the answer is yes, then there is an assessment of the compressor integrally bladed rotor distribution inspection model at step 126. The result of this assessment is compared to the compressor distributed inspection model at step 128 to determine whether the predicted amount of damage to the compressor is within a predetermined acceptable limit. If it is not, then at step 130 there is a boroscopic inspection of the compressor.

On the other hand if step 128 indicates that the predicted amount of damage to the compressor is acceptable, then there is no necessary further inspection required at step 132.

Returning to step 124, if it is determined that the predicted damage across the integrally bladed rotor from the fan distributed inspection module is not acceptable or within a predetermined limit, then at step 134 a boroscopic inspection of the fan is taken.

Then, at step 136 the results of the fan boroscopic inspection are utilized along with the compressor distributed inspection module to predict an amount of damage to the compressor. At step 138 the flow chart asks whether the predicted amount of damage to the compressor based upon the fan boroscopic inspection information is within acceptable limits. If it is, then the flow chart returns to step 132, and no further inspection is required.

On the other hand, if the answer to step 138 is that the predicted damage is not within the predetermined acceptable limits, then at step 140 there is a boroscopic inspection of the compressor.

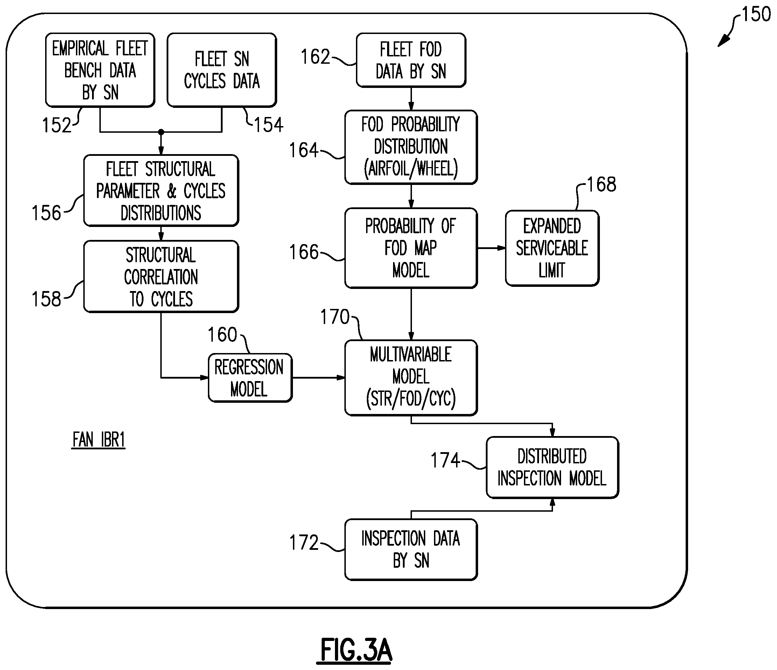

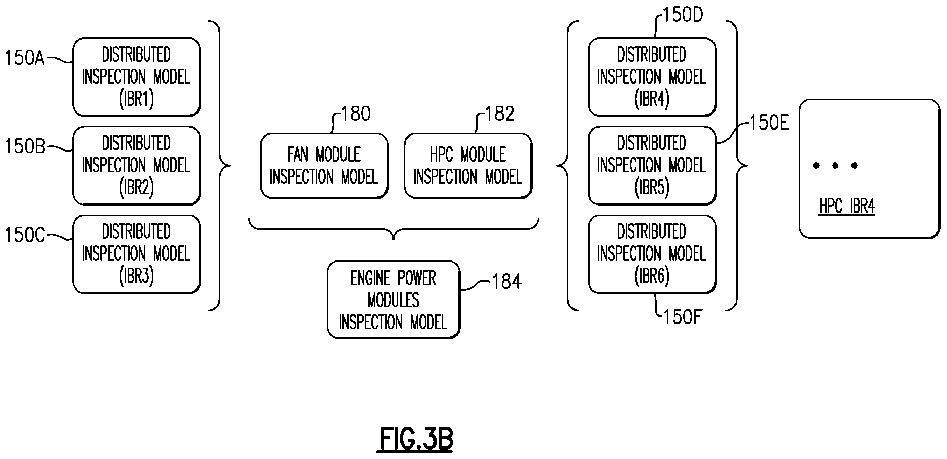

Figures 3A and 3B show how the fan and compressor distributed inspection models are developed.

In Figure 3A, a method 150 for developing a model is illustrated. At step 152 empirical bench data from damage across a fleet of engines is combined with cycle data from the fleet of engines at step 154. The two are combined at step 156 to reach a combined fleet structural parameter and cycle distribution. At step 158 there is a structure correlation of damage to the number of cycles.

At step 160 a regression model correlates the potential of stress, intensity and number of cycles.

In addition, actual fleet FOD damage data is gathered at step 162. At step 164 a probability distribution is developed for secondary damage further downstream from upstream damage based upon the data from step 162.

At step 166 a probability of FOD damage is mapped. This can result in expanded serviceable limit at step 168. Once sufficient data points have been collected step 168 may update the ESL for step 108.

At step 170 a multi variable model including stress, cycles and FOD is developed. Then, at step 174 a distributed inspection model is developed that indicates the likelihood of downstream damage based upon particular damage, stress and cycles for each rotor in the fan and compressor.

Finally at step 172, the accuracy of the distributed inspection model developed at step 174 is compared to actual inspection data to validate the model.

As shown in Figure 3B, such a distributed inspection model is prepared for each of three IBRs 150A, 150B and 150C to in turn develop a propulsor (e.g., fan) module inspection model 180.

In addition, models 150D, 150E and 150F are developed for compressor rotors to provide a compressor module inspection module 182. The models 180 and 182 are the models referenced in the flow chart of Figure 2A.

Then, at step 184 there is a combined engine power module inspection model.

While this disclosure is specific to integrally bladed rotors, it should be understood that a similar technique could be utilized for standard gas turbine engine rotors having separate disks and blades.

As can be appreciated, the combination of the method of Figure 2A, 3A and 3B can result in less indicated inspection, and thus decrease the amount of downtime for an associated aircraft engine.

An inspection system for predicting damage in gas turbine engine sections may be established to execute any of the functionality disclosed herein, including the methods and/or inspection models. A controller for performing this method may include one or more computer processors, memory, storage means, network devices, input and/or output devices, and/or interfaces. The computing devices may be operable to execute one or more software programs. The computing devices may be operable to communicate with one or more networks established by one or more computing devices. The memory may include UVPROM, EEPROM, FLASH, RAM, ROM, DVD, CD, a hard drive, or other computer readable medium which may store data and/or the functionality of this description. The computing device(s) and/or processor(s) may be collectively operable to execute any of the functionality disclosed herein. The computing devices may be a desktop computer, laptop computer, smart phone, tablet, or any other computer device. Input devices may include a keyboard, mouse, touchscreen, etc. The output devices may include a monitor, speakers, printers, etc. Each of the computing devices may include one or more processors coupled to memory. The computing devices may be coupled to each other by one or more connections. The connection may be a wired and/or wireless connection. The connections may be established over one or more networks and/or other computing systems.

A method of inspecting a damaged gas turbine engine under this disclosure could be said to include the steps of 1) receiving a notification of potential damage, 2) checking for visual damage on an outermost rotor in a propulsor section on the gas turbine engine, 2A) if there is no visual damage in step 2) then assessing whether there is likely further downstream damage utilizing a propulsor distributed inspection model for a remainder of the propulsor section and 2B) if there is visual damage in step 2) then comparing the amount of damage to limit, 3) if the amount of damage in step 2B) is greater than the limit, predicting an amount of further downstream damage in the propulsor section utilizing the propulsor distributed inspection model and 4) if the amount of damage in step 2B) is less than the limit, again, predicting an amount of likely downstream damage in the propulsor section utilizing the propulsor distributed inspection model.

An inspection system for predicting damage in gas turbine engine sections under this disclosure could be said to include at least one processor and a memory. The at least one processor is configured to collectively execute a distributed inspection model. The distributed inspection model is developed using empirical damage data from a fleet of bench tests for similar gas turbine engines, and a fleet of data which associates cycles with stress. The distributed inspection model also is developed with fleet damage data associating actual downstream damage data associated with upstream damage data. The distributed inspection model is operable to predict a probability distribution of damage to downstream rotors based upon upstream damage.

While a method embodiment has been disclosed, a worker of ordinary skill in this art would recognize that modifications would come within the scope of this disclosure. As one example, while the propulsor is disclosed as a fan it could also be an open rotor. For that reason, the following claims should be studied to determine the true scope and content of this disclosure.

## Claims

1. A method of inspecting a damaged gas turbine engine (20) comprising the steps of:
1) receiving a notification of potential damage;
2) checking for visual damage on an outermost rotor (79) in a propulsor section (22) on the gas turbine engine (20);
2A) if there is no visual damage in step 2) then assessing whether there is likely further downstream damage utilizing a propulsor distributed inspection model for a remainder of the propulsor section (22); and
2B) if there is visual damage in step 2) then comparing the amount of damage to a limit;
3) if the amount of damage in step 2B) is greater than the limit, predicting an amount of further downstream damage in the propulsor section (22) utilizing the propulsor distributed inspection model; and
4) if the amount of damage in step 2B) is less than the limit, again, predicting an amount of likely downstream damage in the propulsor section (22) utilizing the propulsor distributed inspection model.

2. The method of claim 1, wherein the outermost rotor (79) is an integrally bladed rotor (79), and optionally wherein all of a plurality of rotors in the propulsor section (22) are integrally bladed rotors (79).

3. The method as set forth in claim 1 or 2, further comprising comparing the result of step 4) to an acceptable amount of downstream propulsor damage based upon the propulsor distributed inspection model.

4. The method as set forth in claim 3, wherein if the amount of predicted downstream damage is at a level above the acceptable amount in step 4), then performing a boroscopic inspection on the propulsor section (22).

5. The method as set forth in claim 4, wherein the result of the propulsor boroscopic inspection is utilized with a compressor distributed inspection model to predict an amount of damage in a compressor section (24) and comparing the predicted amount of damage to acceptable compressor damage limits, and if the amount of predicted compressor damage exceeds the acceptable compressor damage limits, then performing a boroscopic inspection on the compressor section (24).

6. The method as set forth in claim 1 or 2, wherein if the step 2B) damage is less than the limit, then predicting downstream propulsor damage per the propulsor distributed inspection model is compared to acceptable downstream limits, and if the predicted amount of downstream propulsor damage exceeds the acceptable propulsor section limits, then performing a boroscopic inspection of the propulsor (22).

7. The method as set forth in claim 6, further comprising performing an assessment of compressor damage to a/the compressor section (24) based upon a/the compressor distributed inspection module in response to the predicted downstream propulsor damage being less than the propulsor acceptable downstream limits.

8. The method as set forth in claim 7, wherein a predicted amount of compressor damage to the compressor section (24) based upon an assessment of the compressor distributed inspection model is compared to compressor damage limits, and if the amount of damage exceeds the compressor damage limits then performing a boroscopic inspection on the compressor section (24).

9. The method as set forth in claim 1 or 2, further comprising performing a propulsor boroscopic inspection of the propulsor section (22), and predicting compressor damage of a compressor section (24) utilizing a compressor distributed inspection model and a result of the propulsor boroscopic inspection, and optionally further comprising comparing the predicted compressor damage to a compressor damage limit, and if the predicted compressor damage exceeds the compressor damage limit, then performing a boroscopic inspection on the compressor section (24).

10. The method as set forth in claim 1 or 2, wherein the propulsor distributed inspection model and a parallel compressor distributed inspection model are developed based upon empirical stress information across a plurality of engines, cycle damage across a plurality of engines, and fleet foreign object damage data across a plurality of engines.

11. The method as set forth in claim 10, wherein the propulsor distributed inspection model includes a model for each of a plurality of rotors in the propulsor section (22), and the compressor distributed inspection model includes a compressor distributed inspection model for each of a plurality of rotors in a compressor section (24).

12. The method as set forth in claim 10 or 11, further comprising comparing the distributed inspection models to actual inspection data to validate the accuracy of the distributed inspection models, and/or wherein a probability distribution is developed and utilized to form the distributed inspection models based upon observed downstream damage from the fleet foreign object damage data.

13. An inspection system for predicting damage in gas turbine engine sections (22, 24) comprising:
at least one processor and memory;
said at least one processor configured to collectively execute a distributed inspection model, the distributed inspection model developed using empirical damage data from a fleet of bench tests for similar gas turbine engines, and a fleet of data which associates cycles with stress, said distributed inspection model also being developed with fleet damage data associating actual downstream damage data with associated upstream damage data; and
said distributed inspection model operable to predict a probability distribution of damage to downstream rotors based upon upstream damage.

14. The system as set forth in claim 13, wherein a probability distribution is developed and utilized to form the distributed inspection model based upon observed downstream damage from the fleet foreign object damage, and/or wherein the distributed inspection model is compared to actual inspection data to validate the accuracy of the distributed inspection model.

15. The system as set forth in claim 13 or 14, wherein the distributed inspection model includes a propulsor distributed inspection model that includes a model for each of a plurality of rotors in the propulsor section (22), and a compressor distributed inspection model that includes a compressor distributed inspection model for each of a plurality of rotors in a compressor section (24).
